# EUROPEAN PATENT APPLICATION

(11) **EP 2 783 577 A1**
(43) Date of publication of application: **01.10.2014**
(21) Application number: 13161201.2
(22) Date of filing: 26.03.2013
(51) Int. Cl.: A23L 1/164, A23L 1/18, A23L 1/217

(54) **An edible snack food product having a low water content and a high solids content, and a method for the production thereof**

(71) Applicant: University College Cork, Cork City (IE)
(72) Inventor: ROOS, Yrjo, Ballincollig, Co. Cork (IE)
(74) Representative: Purdy, Hugh Barry

(57) **Abstract**

A process for making an edible snack food product having a low water content and a high solids content is described. The process comprises a step of providing an edible porous body, for example a freeze-dried fruit or vegetable slice or an extruded cereal product, and coating the body in a high-solids polymer solution, for example 25% (w/w) whey protein isolate, such that the polymer solution infuses into the pores at or close to the surface of the body but does not rehydrate the porous body. Coating may be achieved by spraying the product with the polymer solution or by briefly immersing the porous body in the solution. The coated porous body is then heated to a high temperature to dehydrate the infused polymer solution. This results in closure of the pores at or close to the surface of the porous body.

## Description

### Background to the Invention

Porous, low-water content, biological materials, such as foods with high contents of carbohydrates are sensitive to water. The solids typically exist in a noncrystalline, amorphous state in which water acts as a plasticizer (Slade and Levine, 1991; Roos, 1995). The porous structures providing crispness and crunchiness are traditionally obtained by dehydration, including freeze-drying, extrusion of a formulated mix of carbohydrates and proteins (Roos, 1995), puffing, baking or frying. The main requirement of the production of the porous solids is to allow controlled plasticization of hydrophilic solids to form membranes by removal of a solvent or expansion of a gaseous component. The porous structure may form as a result of expansion of carbon dioxide and removal of water as vapour to form a solid crust as occurs in baking, rapid loss of water from a plasticized dough to form a solid foam as occurs in extrusion and puffing, or by dehydration retaining a porous structure of solids, preferably by freezing of water and sublimation by freeze-drying to obtain glassy solids supporting a solid foam structure (Roos, 1995).

Porous noncrystalline solids, such as food solids and particularly freeze-dried solids, require a package that isolate them from surroundings and reduce exposure to water, oxygen and light. At exposures to ambient conditions, the crispness and crunchiness may be lost and products become soggy. The water uptake is a problem during manufacturing and requires rapid use of materials after opening of a package. Water sorption by porous, noncrystalline solids causes water plasticization and increases water activity. Water plasticization increases sogginess while an increase in water activity increases rates of chemical and enzymatic changes and may promote microbial spoilage.

It is an object of the invention to overcome at least one of the above-referenced problems.

### Statements of Invention

The invention is based on a process for making an edible snack food product having a low water content and a high protein content. The process comprises a step of providing an edible porous body, for example a freeze-dried fruit or vegetable slice or an extruded cereal product, and coating the body in a high-solids polymer solution, for example 25% (w/w) whey protein isolate, such that the polymer solution infuses into the pores at or close to the surface of the body but does not rehydrate the porous body. Coating may be achieved by spraying the product with the polymer solution or by briefly immersing the porous body in the solution. The coated porous body is then heated to a high temperature to dehydrate the infused polymer solution. This results in closure of the pores at or close to the surface of the porous body.

The resultant product has a crispy or crunchy texture that is consistent with dehydrated snack food products produced by conventional means, but in addition has a high-solids (protein) content due to the polymer solution coating. In addition, the polymer coating closes the pores at the surface of the porous body, reducing the hygroscopicity of the product, preventing oxygen diffusion into the product, and thereby improving its storage properties, and delaying or retarding spoilage.

Accordingly, the invention broadly provides a method for producing an edible snack food product having a porous body and a non-porous surface, comprising the steps of providing a porous body of dehydrated edible material, coating the body in an edible high-solids polymer solution, and heating the coated body at a high temperature such that the pores at the surface of the body shrink to form a non-porous surface layer.

The porous body of dehydrated edible material generally comprises an extruded, puffed, freeze-dried, or otherwise dehydrated, edible material. Typically, the edible material comprises carbohydrate, protein, or a mixture of carbohydrate or protein. Suitably, the edible material comprises a portion of a meat, fruit, vegetable or pulse, typically a portion of a fruit or vegetable, for example a slice or cube. Alternatively, the edible material comprises a cereal product that has been the subject of a formation process such as, for example, extrusion or puffing.

In one embodiment, the method comprises an initial step of preparing the porous body of edible material, for example by dehydration, ideally by freeze-drying. Ideally the step involves preparing a porous body of edible material by freeze-drying.

Typically, the porous body of dehydrated edible material has a porosity of from 50-90%, as determined using electron microscopy (Harnkarnsujarit, N., Charoenrein, S. and Roos, Y.H. 2012. Microstructure formation of maltodextrin and sugar matrices in freeze-dried systems. Carbohydrate Polymers 88: 734-742.)

Typically, the edible snack food product has a coating/film of polymer.

The invention also provides an edible snack food product produced according to a method of the invention.

The invention also provides an edible snack food product having a porous, dehydrated, body and a non-porous, optionally substantially non-hygroscopic, surface coated with a protein, and which has a protein content of 20-60% of total solids (w/w). Typically the snack food product has a water content of less than 15% (w/w) when measured gravimetrically. Preferably, the snack food product has a water content of less than 14%, 13%, 12%, 11%, or 10% (w/w) when measured gravimetrically.

Suitably, the protein is a milk protein, typically a whey protein, and ideally a whey protein isolate. Other proteins for coating the porous snack food product may be employed, for example caseins and caseinates, soy proteins and egg proteins.

The edible snack food product suitably has a protein content of 20-60%, preferably 25-55%, more preferably 30-50% (w/w), of total solids, as determined by the Kjeldahl method.

Typically, the snack food product of the invention is crispy or crunchy. The crispness and crunschiness is measured by sensory analysis using hedonic scaling as well as by texture analysing systems, particularly penetrometric and compression testing.

Typically, the non-porous surface is formed by infusing a high-solids polymer into the pores at or near the surface of the porous body without substantial rehydration of the porous body, and heating the porous body at a temperature above 100°C, more preferably above 110°C, ideally from 120°C to 180°C, for a sufficient time to remove excess solvent and to form the non-porous surface layer, for example for 3-8 minutes. Typically, the time between immersion or coating, and heating, is from 2 seconds to 120 seconds.

The edible snack food product is typically selected from a meat, fruit, vegetable or pulse, and preferably comprises a portion of a fruit or vegetable, for example a slice or crisp of the fruit or vegetable. The slice or crisp typically has a thickness of less than 5mm, 4mm, 3mm, 2mm or 1mm, and suitable from 1 to 5mm or from 2-4mm. The fruit may be any fruit, for example an apple, orange, banana, kiwi, pineapple, or mellow. The vegetable may be any vegetable, expecially a root vegetable such as, for example, a potatoe, turnip, parsnip or carrot.

The edible snack food product may also be a product formed by a process selected from extrusion, puffing, or freeze-drying. Preferably, the product is freeze-dried. In one embodiment, the product is a cereal based product, for example a product formed from a cereal dough in a process which dehydrates the dough, for example extrusion, puffing or freeze-drying.

The invention also provides an edible snack food product comprising a porous freeze-dried slice or crisp of fruit or vegetable, the product having a non-porous surface coated with exogenous protein, and having a protein content of 20-60% of total solids (w/w). Typically, the exogenous protein is a milk protein, for example a whey or casein, ideally a whey protein isolate.

The invention also provides a high-solids snack food product comprising a body composed of a freeze-dried slice or crisp of fruit or vegetable, or a freeze-dried or otherwise dehydrated cereal food or breakfast cereal, and having a non-porous substantially non-hydroscopic surface coated with protein.

Typically, freeze-drying comprises an initial freezing step, followed by freeze-drying (sublimation). The freezing temperature may be varied to provide an optimal porosity in the product due to formation of ice crystals. Freezing is generally carried out until a final freezing temperature is reached. Freeze-drying (sublimation) results in sublimation of the ice crystals, leaving a porous product. Freeze-drying is generally carried out a temperature of less than - 20°C or less than -30°C.

In one embodiment, the desired final freezing temperature is between -10°C and -70°C. Suitably, the desired final freezing temperature is between -30°C and -50°C. Typically, the desired final freezing temperature is between -35°C and -45°C, ideally about -40°C.

The freeze-drying process generally includes a drying stage, which is carried out after the final freezing temperature is reached.. The process typically includes a final sublimation step where an ice phase in the formed scaffold is sublimated under vacuum for a suitable period of time.

### Definitions

The term "dehydrated" or "low water content" as employed herein means a material having a water content of less than 15%, (w/w),when measured gravimetrically. Gravimetric water content measurement should be understood to mean water content determined from weight change. In these systems the samples are weighted and then dehydrated in a vacuum oven over night at 60-80°C. The loss of weight is taken as water content.

The term "non-porous" as applied to the surface layer should be understood to mean that the porosity of the body of edible material at the surface is disrupted due to walls of the pores being plasticized resulting in shrinkage and formation of a denser surface layer. This occurs due to the presence of the high solids polymer which enters, or infuses into, the pores at the surface of the edible body and upon removal of water closes the pores and forms an edible polymer film at the surface of the edible body.

The term "coating the body" means that the body is treated with the edible high-solids polymer solution such that it infuses into the pores of the body at or close to the surface of the body without infusing into the porous centre of the body, thus preventing rehydration of the body. Coating can be achieved by spraying the edible high-solids polymer solution onto a surface of the body, or by immersing the porous body into the edible high-solids polymer solution for a short period of time, i.e. enough to allow infusion of the polymer solution into the pores at or close to the surface, but not enough to allow substantial rehydration of the porous body. Thus, immersion time may be from 2 seconds to 30 seconds, and the time between immersion and baking may be from 2 seconds to 2 minutes. It will be appreciated that the immersion time will vary depending on a number of variables, for example the concentration of the polymer solution, the type of polymer, the type of solvent for the polmer, and the presence of other components in the polymer solution.

The term "high-solids polymer solution" should be understood to mean a protein or carbohydrate solution having a solids content of 10-40%, typically 20-40%, suitably 20-30%, preferably 30-40% (w/v). Ideally, the solution is a protein solution, for example a solution of a milk protein such as whey or casein, for example a whey protein isolate.

The term "high temperature" should ideally be understood to mean a temperature greater than 100°C, 110°C or 120°C, for example 120-180°C. The coated body is typically heated by baking in an oven.

In this specification, the term "porous" should be understood to mean a porosity of at least 50% as determined using electron microscopy (Harnkarnsujarit, N., Charoenrein, S. and Roos, Y.H. 2012. Microstructure formation of maltodextrin and sugar matrices in freeze-dried systems. Carbohydrate Polymers 88: 734-742.)

In this specification, the term "dehydrated" should be understood to mean having a water content of less than 15%, (w/w) as determined by the method of gravimetric measurements.

In this specification, the term "substantially non-hygroscopic" should be understood to mean low or no water uptake from a humid air.

The term "high protein content" as applied to the edible snack food product of the invention should be understood to mean a protein content of 20-60% of total solids (w/w).

### Detailed Description of the Invention

### Snack foods

Common methods for production of crispy snacks are based on baking, frying or extrusion. Frying cannot be carried out without oil while extrusion requires formation of a dough of ingredients and the process cannot retain normal cell structures of vegetables and fruits, or other materials. The present invention does not require oil and it retains the natural properties of vegetables and fruits. In an extrusion process, the formation of a porous structure is dependent on expansion of the plasticized solids and their glass formation resulting from dehydration and cooling (Roos, 1995). The process requires starch and lower molecular weight carbohydrates which can produce a glassy membrane structure that cannot flow under gravity. Such a structure is also responsible for product crispness and crunchiness (Roos et al., 1998). The solid foam structure obtained in baking, puffing or extrusion, e.g., in production of baked products, cereal foods, breakfast cereals, and snacks, is hygroscopic and it can loose crispness and crunchiness rapidly upon water uptake from surroundings. The solid foam can also absorb rapidly large quantities of liquid which results in sogginess and loss of crispy and crunchy characteristics. Conversely, the use of this rapid liquid absorption followed by rapid dehydration is used as the basic property of the porous solids structures in the present invention.

Freeze-drying and vacuum drying to a limited extent, produce highly porous structures of water-containing biological materials. The process freezes water which is then removed by sublimation. A noncrystalline, glassy network of the solids forms during the freezing process (Roos, 2010). This glassy network is retained during ice sublimation and the ice crystals leave pores surrounded by the continuous glassy solids network (Harkarnsujarit et al., 2012). The noncrystalline solids exhibit high hygroscopicity. Freeze-dried vegetables and fruits contain large quantities of low molecular weight sugars which take up water and cannot retain crispness when exposed to normal atmospheric conditions. An infusion of freeze-dried solids by a high-solid liquid results in rapid absorption which normally is seen as typical rapid rehydration of freeze-dried foods. In the present invention, the rapid absorption of liquids by freeze-dried solids is used to increase the solids content and vary the solids composition of the dehydrated materials. The increased solids, particularly proteins are film-forming materials that reduce water uptake and their water sorption properties enhance retention of crispness and crunchiness at higher ambient humidities. As the liquid is absorbed to below the surface of the porous structure it plasticizes walls surrounding the pores which results in shrinkage and formation of a denser surface layer. This occurs in the thermal process, e.g., baking, subsequent to the liquid and solids infusion. The removal of water during the thermal treatment dehydrates the infused solids which close the pores in the vicinity of the product surface and solids, such as proteins, produce an edible film on the product surface. The altered surface layer on the materials may protect the solids against water uptake as well as sensitive components, e.g., colour, flavour, lipids, and vitamins, and enhance flavour retention.

Porous biological materials have a low density and their glassy membranes are highly fragile. The infused solids in porous materials increase the solids content and density of the solids. This may significantly improve the economics of the production of dehydrated solids and decrease their fragility. For example, the weight of the freeze-dried solids of fruits and vegetables is approximately only 10% of the fresh products (water content 90%) although the solids occupy the fresh product volume. As the present invention may double the solids content using lower costs edible solids, the unit price of the final product can be significantly reduced. Furthermore, common vegetables and fruits have low protein contents while this process allows the manufacturing of high protein vegetables and fruit-based products which currently are nonexisting.

Materials intended for increased solids are immersed or sprayed with a concentrated solution containing proteins, e.g., whey proteins, or other solids, e.g., starch or its derivatives. The aqueous solution or dispersion may also contain vitamins, minerals, flavours, herbs, spices, or other desired components, such as colour or browning reactants. It may also contain emulsified hydrophobic substances in a liquid emulsion. This process is carried out rapidly to avoid extensive absorption of the solvent (water) and sogginess, and the materials are dehydrated or baked at a high temperature (120-180°C) to retain crispness and crunchiness and to reform the surface layer with associated changes in hygroscopicity, colour and flavour. The added solids preferably increase the protein content of vegetable and fruit solids, the added solids fill pores of the solids and decrease water uptake in storage. The pores are also closed in the heat treatment or baking and the solids, particularly proteins, form a protective film on the freeze-dried solids providing a protective layer against environmental factors, such as light, oxygen and moisture. A direct application is in the manufacturing of fat free, nutritious, high protein crisps and snacks. The process would also be applicable to manufacturing of other high solids food and pharmaceutical products and delivery systems.

### Advantages of the product and process of the invention.

Absorption of a highly concentrated edible polymer (e.g., protein) solution by a porous edible material and subsequent drying of the solvent produces a surface layer on the porous material that has a high polymer content. The polymer layer reduces the rate of water uptake and a polymer coating on the outer surface of the material is formed that reduces water sorption and oxygen diffusion.

The solvent (generally water) plasticizes a surface layer during infusion. This plasticization results in liquid flow of the plasticized solids which reduces pore sizes within the plasticized surface layer. The plasticizing solvent (water) is removed in subsequent thermal treatment (baking) and a dense, crispy solids layer on the surface is formed. The altered surface layer texture reduces hygroscopicity and water uptake. The increased solids content and altered surface layer texture stabilize the product, reduce packaging requirements and improve resistance against water uptake.

Freeze-dried and vacuum dried vegetables and fruits can be produced as slices or cuts of varying sizes and subsequently infused by a high-solids edible polymer solution. After solvent removal, the crispness and crunchiness can be retained and the product stability improved. There is no oil or lipid added to the product unless an emulsion is used as the infusion material.

A high absorbed polymer, e.g., protein, content can be obtained by infusion provided that the solids content of the infusion liquid is maximized.

The polymer (protein) content of extruded and puffed products and breakfast cereals can be increased by infusion of a high-solids polymer solution and subsequent rapid removal of the solvent to retain the crispy and crunchy porous texture. A polymer (protein) surface layer alters the product surface characteristics and the rate of loss of crispness and crunchiness is reduced.

Infusion of a high-solids protein solution by immersion or spraying results in absorption of the solids by porous food solids and the absorbed protein is retained in the product solids after subsequent thermal process (baking, dehydration) with a significant increase of protein content of the solids.

Proteins and protein hydrolysates can be used as solids source in high-solids infusion liquids to produce crispy and crunchy high-protein foods with health-promoting components, as perception of bitterness is reduced in low-water foods or the flavour can be masked in the product.

The infusion liquid can carry flavours, spices, herbs and functional components, such as probiotic bacteria and vitamins to become absorbed in the surface layer of the resultant crispy and crunchy solids.

### Examples

### Example 1: High protein crisps

Root vegetables, such as carrots, beetroot, potatoes, celeriac, parsnip, swedes, are sliced to a thickness of 2-4 mm. The sliced vegetables may be blanched using boiling water or steam to reduce microbial load and inactivate enzymes. The slices are frozen at a controlled rate using temperatures -20 to -80°C to provide desired ice crystal sizes. The frozen slices are freeze-dried to remove ice crystals and to obtain high porosity of the solids (the volume of the slices is retained). Freeze-drying is carried out at an ice sublimation temperature of -30°C or lower at a chamber pressure of 0.5 mbar or lower.

A whey protein isolate solution is prepared to contain 20 - 40% solids in water (w/v). The solution at room temperature is applied on the freeze-dried slices by rapid immersion (i.e. 10 seconds) at room temperature and baking/dehydration at 130-160°C for 3-10 minutes within 2 seconds to 2 minutes of immersion. The immersion time is controlled to maximize solids uptake but at a minimal loss of the freeze-dried porous structure. The baking/dehydration temperature is adjusted to control colour and flavour development and product crispness and crunchiness. Baking time of 3 to 10 minutes is controlled for optimal crispness, flavour and colour development.

The whey protein solution can include herbs, spices, flavours, probiotic bacteria and other desired components.

The baked/dehydrated crisps have a protein content of 20 - 60% of solids.

### Example 2: High protein fruit snack

Fruits, such as strawberries, are sliced to a thickness of 2-4 mm. The slices are frozen at a controlled rate using temperatures -20 to -80°C to provide desired ice crystal sizes. The frozen slices are freeze-dried to remove ice crystals and to obtain high porosity of the solids (the volume of the slices is retained). Freeze-drying is carried out at an ice sublimation temperature of -30°C or lower at a chamber pressure of 0.5 mbar or lower.

A whey protein isolate solution is prepared to contain 20 - 40% solids in water. The solution at room temperature is applied on the freeze-dried slices by rapid immersion (i.e. 10 seconds) at room temperature and baking/dehydration at 130-160°C for 3-10 minutes within 2 seconds to 2 minutes of immersion at room temperature. The immersion time is controlled to maximize solids uptake but at a minimal loss of the freeze-dried porous structure. The baking/dehydration temperature is adjusted to control colour and flavour development and product crispness and crunchiness.

The whey protein solution can include flavours, probiotic bacteria and other desired components. The snacks can be used as such or as ingredients of other foods, e.g., muesli or cranola, or enjoyed with other foods.

The baked/dehydrated crisps have a protein content of 20 - 60% of solids.

### Example 3: Surface treatment of breakfast cereals

Breakfast cereals, such as rice crispies are surface treated using a polymer solution.

A whey protein isolate solution is prepared to contain 20 - 40% solids in water. The solution at room temperature is applied by rapid immersion of 30 seconds to 3 minutes duration or spraying at room temperature followed by baking/dehydration at 130 - 160°C for 3-10 minutes within 2 seconds up to 2 minutes of baking. The immersion time is controlled to maximize solids uptake but at a minimal loss of the porous structure. The baking/dehydration temperature is adjusted for 3 to 10 minutes duration to control colour and flavour development and product crispness and crunchiness.

The whey protein solution can include flavours, probiotic bacteria and other desired components, including vitamins.

The baked/dehydrated crisps have a protein content of 20 - 60% of solids.

Surface treated breakfast cereals can be used as such or with milk or other liquid foods or added to yoghurt. The surface treatment reduces the rate of water uptake from the liquid and retains the crispy and crunchy characteristics longer than conventional breakfast cereals.

### References

Harnkarnsujarit, N., Charoenrein, S. and Roos, Y.H. 2012. Microstructure formation of maltodextrin and sugar matrices in freeze-dried systems. Carbohydrate Polymers 88: 734-742.
Roos, Y.H. 1995. Phase Transitions in Foods. San Diego: Academic Press.
Roos, Y.H. 2010. Glass transition temperature and its relevance in food processing. Annual Reviews in Food Science and Technology 1:469-496.
Roos, Y.H., Roininen, K., Jouppila, K. and Tuorila, H. 1998. Glass transition and water plasticization effects on crispness of a snack food extrudate. International Journal of Food Properties 1 (2): 163-180.
Slade, L. and Levine, H. 1991. Beyond water activity: Recent advances based on an alternative approach to the assessment of food quality and safety. Critical Reviews in Food Science and Nutrition 30: 115-360.

## Claims

1. A method for producing an edible snack food product having a porous body and a non-porous surface, comprising the steps of providing a porous body of dehydrated edible material, coating the body in an edible high-solids polymer solution, and heating the coated body at a high temperature such that the pores at the surface of the body shrink to form a non-porous surface layer.

2. A method as claimed in Claim 1 in which the porous body of dehydrated edible material comprises a portion or slice of a fruit or vegetable product.

3. A method as claimed in Claim 1 or 2 comprising an initial step of providing a body of edible material, and freeze-drying the body to provide the porous body of dehydrated edible material.

4. A method as claimed in any preceding Claim in which the high solids polymer solution is 20-40% (w/v) protein solution.

5. A method as claimed in Claim 4 comprising the steps of providing a slice of fruit or vegetable, freeze-drying the slice to provide a porous body of dehydrated edible material, coating the porous body in a 20-40% (w/v) protein solution for a period of time sufficient to allow the protein solution infuse into the pores at or close to the surface of the porous body without substantial rehydration of the porous body, and heating the coated porous body to a temperature of 120°C to 180°C to form the non-porous surface layer.

6. A method as claimed in Claim 5 which is a method of making a root vegetable crisp.

7. A method as claimed in Claim 4 comprising the steps of providing a portion of cereal dough, dehydrating the portion of cereal dough to provide a porous body of dehydrated edible material, coating the porous body in a 20-40% (w/v) protein solution for a period of time sufficient to allow the protein solution infuse into the pores at or close to the surface of the porous body without substantial rehydration of the porous body, and heating the coated porous body to a temperature of 120°C to 180°C to form the non-porous surface layer.

8. A method as claimed in Claim 7 in which the portion of cereal dough is dehydrated by a process selected from extrusion, puffing, or freeze-drying.

9. An edible snack food product having a porous, dehydrated, body and a non-porous, substantially non-hygroscopic, surface coated with a protein, and which has a protein content of 20-60% of total solids (w/w) and a water content of less than 15%.

10. An edible snack food product as claimed in Claim 9 in which the non-porous surface is formed by infusing a high-solids polymer solution into the pores at or near the surface of the porous body without substantial dehydration of the porous body, and heating the porous body at a temperature of 120°C to 180°C to form the non-porous surface layer.

11. An edible snack food product as claimed in Claim 9 or 10 which is a slice or crisp of fruit or vegetable, and which has a thickness of from 1 to 5mm.

12. An edible snack food product as claimed in Claim 9 or 10 which is a breakfast cereal product.

13. An edible snack food product as claimed in Claim 9 in which the body porous dehydrated body is freeze-dried.

14. An edible snack food product as claimed in Claim 9 and comprising a porous freeze-dried slice or crisp of fruit or vegetable, the product having a non-porous surface coated with a protein, and having a protein content of 20-60% of total solids (w/w).

15. An edible snack food product as claimed in Claim 14 in which the protein coating is a whey protein.
